# EUROPÄISCHE PATENTSCHRIFT

(11) **EP 1 774 184 B1**
(45) Veröffentlichungstag und Bekanntmachung des Hinweises auf die Patenterteilung: **25.11.2009**
(21) Anmeldenummer: 05857277.7
(22) Anmeldetag: 06.05.2005
(51) Int. Cl.: F16B 19/10

(54) **SPREIZNIET**
EXPANSION RIVET
RIVET A EXPANSION

(30) Priorität: 28.07.2004 DE 102004036621
(43) Veröffentlichungstag der Anmeldung: 18.04.2007
(73) Patentinhaber: A. RAYMOND ET CIE, 38000 Grenoble (FR)
(72) Erfinder: BOUBTANE, Mohieddine, F-38170 Seyssinet-Pariset (FR); RANVAL, Yann, F-38410 Vaulnaveys le Bas (FR); LEGAT, Jean-Jacques, F-38690 Colombe (FR)
(74) Vertreter: Rüttgers, Joachim
(86) Internationale Anmeldenummer: PCT/EP2005/004934
(87) Internationale Veröffentlichungsnummer: WO 2006/012928

(56) Entgegenhaltungen:
- EP-A- 0 682 186
- EP-A- 1 375 931
- WO-A-03/072957
- US-A- 5 775 860

## Beschreibung

Die Erfindung betrifft ein Spreizniet gemäß dem Oberbegriff des Patentanspruches 1.

Ein derartiger Spreizniet ist aus EP 1 375 931 A1 bekannt. Dieser vorbekannte Spreizniet verfügt über ein Halteteil, das eine Anzahl von radial nach außen abspreizbaren Schenkeln und eine Auflageplatte aufweist, an die die Schenkel angesetzt sind. Weiterhin ist ein durch eine Durchführausnehmung der Auflageplatte in das Halteteil einführbares Betätigungsteil vorhanden, das einen Schaft aufweist. In einer Fixierstellung des Betätigungsteiles werden durch Eingriff von in einem Wirkbereich der Schenkel angeordneten Aufweitvorsprünge die Schenkel radial nach außen ausgestellt. Das Betätigungsteil weist eine Kopfplatte auf, die in der Fixierstellung an der Auflageplatte anliegt. Weiterhin sind an dem Schaft angesetzte Rastnasen vorhanden, die über eine bündig mit der Durchführausnehmung ausgebildete Seitenfläche des Schaftes vorstehen und mit einer Aufgleitfläche von der Kopfplatte wegweisend flach angeschrägt sowie mit einer Hinterrastfläche der Kopfplatte zugewandt steil angestellt sind. Die Rastnasen sind dabei in einem Abstand von der Kopfplatte angeordnet ist, der so eingerichtet ist, dass bei Anliegen der Hinterrastflächen an der Kopfplatte der Schaft mit den Aufweitvorsprüngen eingriffsfrei ist. Bei dieser Spreizniet weist das Betätigungsteil sowie entsprechend die Durchführausnehmung einen rundlichen Querschnitt auf, wobei die Rastnasen an der Außenseite von massiven, sich radial erstreckenden Stegen in einem Winkelabstand von 90 Grad angeordnet sind und in ihnen zugeordneten Ausnehmungen gleiten. Dadurch ist die Ausrichtung des Betätigungsteiles um Einführen in das Halteteil nicht ganz einfach, da keine Vollzugsrichtung vorgegeben ist. Weiterhin besteht die Gefahr, dass bei einer Relativdrehung zwischen dem Halteteil und dem Betätigungsteil die Rastnasen abscheren.

Eine weitere, der vorgenannten Ausgestaltung sehr ähnliche Spreizniet ist aus WO 03/072957 A2 bekannt.

Ein weiterer Spreizniet ist aus der US-A-5,201,623 bekannt. Dieser Spreizniet verfügt über ein Halteteil, das wenigstens zwei radial nach außen abspreizbare Schenkel und eine Auflageplatte aufweist, an die Schenkel angesetzt sind. Die Schenkel verfügen über nach innen weisende Aufweitvorsprünge. Weiterhin besteht bei der vorbekannten Vorrichtung ein Betätigungsteil aus einem Schaft, an dem eine Vorsprungsanordnung ausgebildet ist. In einer Montagestellung liegen die Aufweitvorsprünge in Vertiefungen der Vorsprungsanordnung, so dass die Schenkel im wesentlichen parallel zu dem Schaft verlaufen und der Spreizniet in eine sich beispielsweise durch ein Trägerteil und ein Auflageteil erstreckenden Setzausnehmung einfügbar ist. In einer Fixierstellung des Betätigungsteiles werden nach axialer Bewegung des Schaftes in Einführrichtung durch Eingriff der Vorsprungsanordnung mit den Aufweitvorsprüngen in einem Wirkbereich die Schenkel nach außen ausgestellt. Dadurch ist der Spreizniet in der Setzausnehmung fixierbar.

Zum Lösen des Spreiznietes wird der Schaft in Einführrichtung weiter axial verschoben, bis die Aufweitvorsprünge in weiteren Vertiefungen der Vorsprungsanordnung zum Liegen kommen und die Schenkel wieder im wesentlichen parallel zu dem Schaft verlaufen. Nunmehr ist der Spreizniet wieder aus der Setzausnehmung entfernbar. Zum erneuten Einsatz des Spreiznietes muss der Schaft entgegen der Einführrichtung wieder in die Montagestellung überführt werden. Dies hat sich jedoch als verhältnismäßig umständlich erwiesen und führt auf Grund des Passierens der Fixierstellung in zwei Richtungen für einen Setz- und Lösezyklus zu einem nicht unerheblichen Verschleiß insbesondere an den Aufweitvorsprüngen und der Vorsprungsanordnung.

Aus EP 0 682 186 A1 ist eine Spreizniet bekannt, bei der eine Kopfplatte eines Betätigungsteiles in eine in eine Auflageplatte eines Halteteiles eingebrachte Einfügeausnehmung einfügbar ist.

Der Erfindung liegt die Aufgabe zugrunde, einen Spreizniet der eingangs genannten Art anzugeben, der sich durch ein einfaches Einführen sowie eine hohe Verdrehfestigkeit des Befestigungsteiles gegenüber dem Halteteil auszeichnet.

Diese Aufgabe wird bei einem Spreizniet der eingangs genannten Art erfindungsgemäß mit den kennzeichnenden Merkmalen des Patentanspruches 1 gelöst.

Durch die Ausgestaltung der erfindungsgemäßen Spreizniet lässt sich das Betätigungsteil in einer einfach erkennbaren Ausrichtung gegenüber dem Halteteil mit verhältnismäßig geringen Einfügekräften in dieses einführen, bis die Rastnasen die Kopfplatte hinterrasten, da die Rastnasen durch das Ansetzen an den Sockelstücken beim Einführen verhältnismäßig leicht verformbar sind. Durch die eckige Ausgestaltung des Querschnitts des Schaftes des Betätigungsteiles sowie der Durchführausnehmung werden bei einer Relativdrehung zwischen dem Halteteil und dem Betätigungsteil die dann wirkenden Scherkräfte von den Rastnasen ferngehalten.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel eines erfindungsgemäßen Spreiznietes,
- Fig. 2: einen Schnitt durch einen Schaft eines Betätigungsteiles des erfindungsgemäßen Spreiznietes gemäß Fig. 1,
- Fig. 3: in einer Seitenansicht das Ausführungsbeispiel gemäß Fig. 1 und Fig. 2 mit dem Betätigungsteil in einer Montagestel- lung und
- Fig. 4: in einer Seitenansicht das Ausführungsbeispiel gemäß Fig. 1 bis Fig. 3 mit dem in einer Setzausnehmung angeordne- ten Betätigungsteil in einer Fixierstellung.

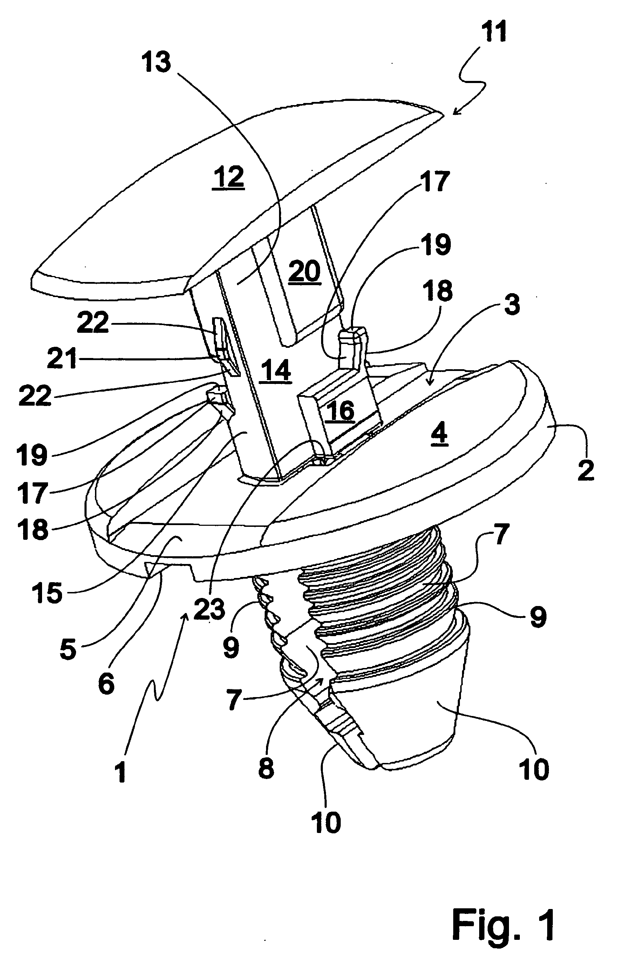

Fig. 1 zeigt in einer perspektivischen Ansicht ein Ausführungsbeispiel eines erfindungsgemäßen Spreiznietes. Der aus Kunststoff gefertigte Spreizniet gemäß Fig. 1 verfügt über ein Halteteil 1, das mit einer flachen, in diesem Ausführungsbeispiel kreisförmigen Auflageplatte 2 ausgestattet ist. In die Auflageplatte 2 ist eine sich diametral erstreckende Einfügeausnehmung 3 eingebracht, die in Richtung einer Deckseite 4 der Auflageplatte 2 geöffnet ist. In einem randseitigen Bereich der Einfügeausnehmung 3 ist als Werkzeugansatzstruktur eine Schräge 5 ausgebildet.

An einer der Deckseite 4 der Auflageplatte 2 gegenüberliegenden Auflageseite 6 sind an der Auflageplatte 2 zwei Schenkel 7 angesetzt, die im wesentlichen rechtwinklig zu der Auflageplatte 2 ausgerichtet und in einem seitlichen Abstand voneinander angeordnet sind, so dass zwischen den Schenkeln 7 eine Schaftausnehmung 8 ausgebildet ist. In einem an die Auflageplatte 2 angrenzenden Bereich weisen die Schenkel 7 umfänglich umlaufende Rastringe 9 auf, während die der Auflageplatte 2 gegenüberliegenden freien Enden der Schenkel 7 mit von dem äußeren Rand der freien Enden in Richtung der Auflageplatte 2 ansteigenden Konusabschnitten 10 ausgebildet sind.

Das Ausführungsbeispiel eines erfindungsgemäßen Spreiznietes gemäß Fig. 1 verfügt weiterhin über ein Betätigungsteil 11, das mit einer Kopfplatte 12 und mit einem an die Kopfplatte 12 angesetzten sowie im wesentlichen rechtwinklig zu dieser ausgerichteten Schaft 13 ausgebildet ist. Der Schaft 13 weist einen eckigen Querschnitt mit jeweils zwei jeweils paarweise einander gegenüberliegenden breiten Seitenflächen 14 und schmale Seitenflächen 15 auf.

An den breiten Seitenflächen 14 sind vorstehende, in einem Abstand von der Kopfplatte 12 angeordnete Sockelstücke 16 ausgebildet, an denen in Richtung der Kopfplatte 12 weisende und über die schmalen Seitenflächen 15 überstehende Rastnasen 17 angesetzt sind. Die Rastnasen 17 sind mit Aufgleitflächen 18 von der Kopfplatte 12 wegweisend flach angeschrägt sowie mit Hinterrastflächen 19 der Kopfplatte 12 zugewandt steil angestellt. In Verlängerung der Sockelstücke 16 in Richtung der Kopfplatte 12 sind an den breiten Seitenflächen 14 entsprechend den Sockelstücken 16 dimensionierte Füllstücke 20 angesetzt, die an die Kopfplatte 12 angrenzen.

An den schmalen Seitenflächen 15 ist zwischen der Kopfplatte 12 und den Rastnasen 17 jeweils ein Fixiervorsprung 21 angesetzt, die mit Schrägflächen 22 sowohl in Richtung der Kopfplatte 12 als auch von der Kopfplatte 12 wegweisend flach angeschrägt sind.

In der Darstellung gemäß Fig. 1 ist der Schaft 13 des Betätigungsteiles 11 durch eine in die Auflageplatte 2 eingebrachte und entsprechend dem Querschnitt des Schaftes 13 im Bereich sowohl der Sockelstücke 16 als auch der Füllstücke 20 dimensionierte Durchführausnehmung 23 abschnittsweise in das Halteteil 1 eingefügt.

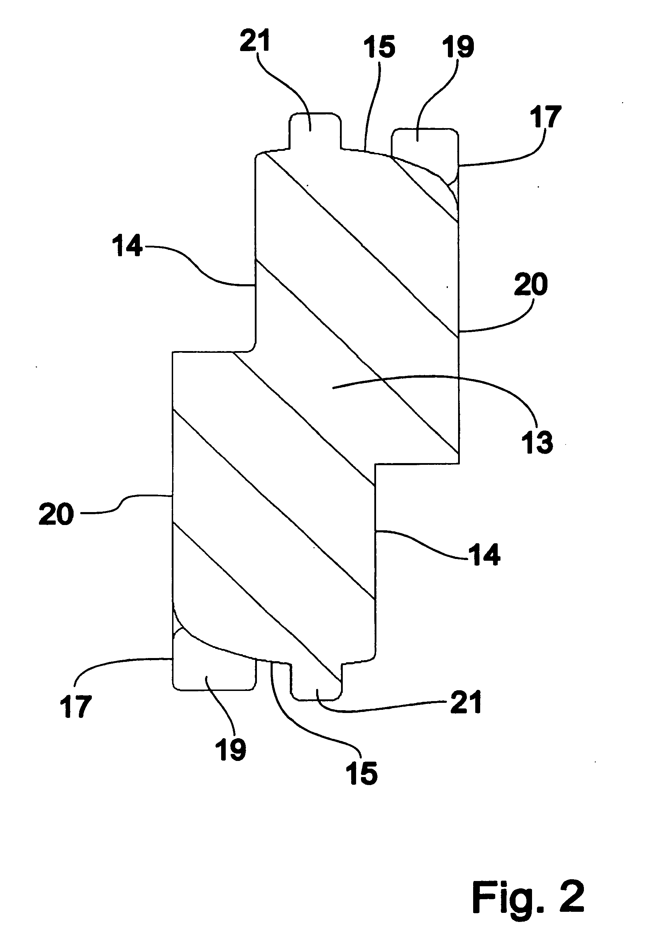

Fig. 2 zeigt einen Schnitt durch den Schaft 13 des Betätigungsteiles 11 des erfindungsgemäßen Spreiznietes gemäß Fig. 1 im Bereich der Fixiervorsprünge 21 mit Blick auf die Rastnasen 17. Aus Fig. 2 ist deutlich ersichtlich, dass die Rastnasen 17 auf ihren der Kopfplatte 12 zugewandten, rechtwinklig zu dem Schaft 13 ausgerichteten Hinterrastflächen 19 über den Umfang des Schaftes 13 vorstehen.

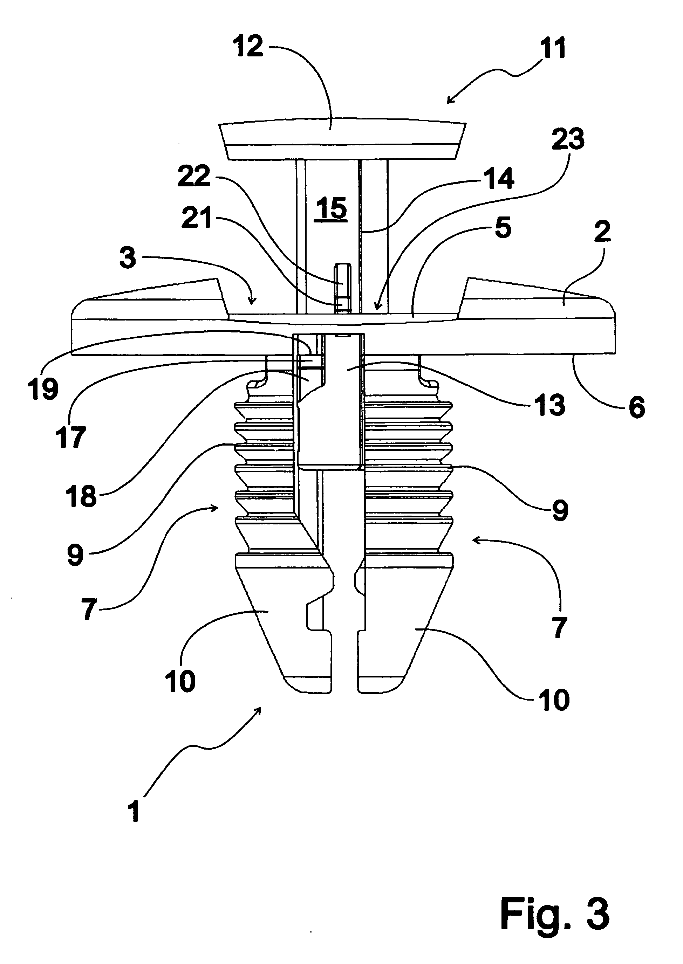

Fig. 3 zeigt in einer Seitenansicht das Ausführungsbeispiel gemäß Fig. 1 mit dem Betätigungsteil 11 in einer Montagestellung, in der der Schaft 13 des Betätigungsteiles 11 so weit durch die Durchführausnehmung 23 hindurch zwischen die Schenkel 7 eingeführt ist, dass die Fixiervorsprünge 21 an dem Rand der Durchführausnehmung 23 anliegen sowie die Rastnasen 17 die Auflageplatte 2 auf der Seite der Schenkel 7 hintergreifen und an der Auflageseite 6 anliegen.

Das Überführen des Betätigungsteiles 11 von der in Fig. 1 gezeigten Stellung in die Montagestellung gemäß Fig. 3 ist dadurch ermöglicht, dass die Rastnasen 17 mit ihren Aufgleitflächen 18 am Rand der Durchführausnehmung 23 aufgleiten, bis auf Grund der relativen Elastizität des Kunststoffmateriales die Hinterrastflächen 19 die Auflageplatte 2 an ihrer Auflageseite 6 hintergreifen. Bei dem dargestellten Ausführungsbeispiel eines erfindungsgemäßen Spreiznietes entspricht der Abstand in Längsrichtung des Schaftes 13 zwischen den Hinterrastflächen 19 und den Fixiervorsprüngen 21 in etwa der Dicke der Auflageplatte 2 im Bereich der Durchführausnehmung 23, so dass in der Montagestellung gemäß Fig. 3 das Betätigungsteil 11 bis zu einer gewissen Kraftbeaufschlagung gegen weiteres Einführen in das Halteteil 1 gesichert ist.

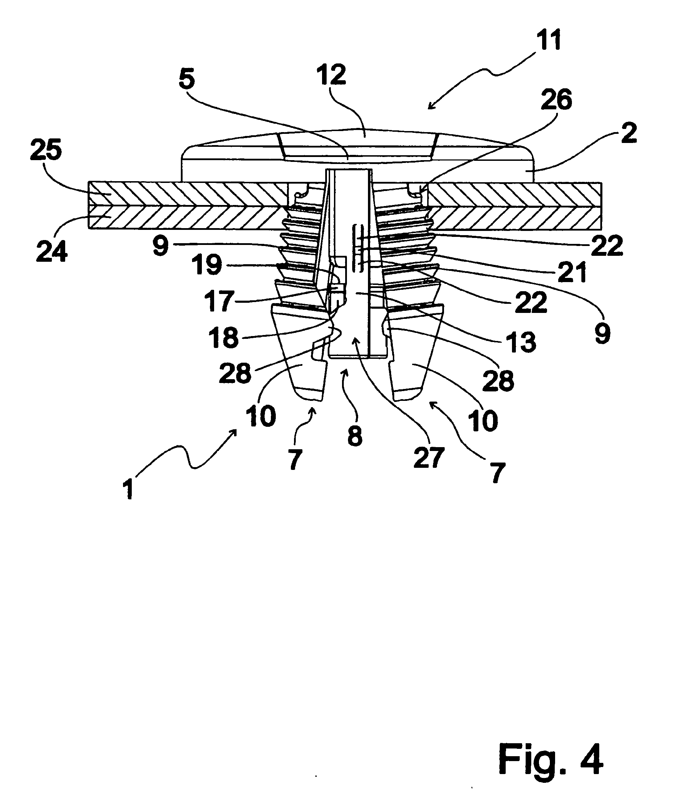

Fig. 4 zeigt in einer Seitenansicht das Ausführungsbeispiel gemäß Fig. 1 bis Fig. 3, das in einer Fixierstellung in einer in einem flachen Trägerteil 24 und einem auf das Trägerteil 24 aufgelegten Auflageteil 25 ausgebildeten Setzausnehmung 26 eingefügt ist und in der Fixierstellung das Auflageteil 25 mit dem Trägerteil 24 verbindet. In der Fixierstellung ist der Schaft 13 so weit in die Schaftausnehmung 8 eingeführt, dass das der Kopfplatte 12 gegenüberliegenden freie Ende 27 des Schaftes 13 in einem Wirkbereich mit an den Schenkeln 7 ausgebildeten und aufeinander zu weisenden Aufweitvorsprüngen 28 in Eingriff kommt. Bei Eingriff des freien Endes 27 des Schaftes 13 mit den Aufweitvorsprüngen 28 werden die Schenkel 7 nach außen abgespreizt, so dass der Spreizniet in der Setzausnehmung 26 über einen relativ großen Dickenbereich für das Trägerteil 24 verankerbar ist.

Wie aus Fig. 4 besonders deutlich erkennbar ist, ist die Kopfplatte 12 so ausgebildet, dass sie sich in der Fixierstellung bündig in die Einfügeausnehmung 3 der Auflageplatte 2 des Halteteiles 1 einfügt.

Der erfindungsgemäße Spreizniet ist wieder aus der Setzausnehmung 26 entfernbar, indem beispielsweise das flache Ende eines Schraubendrehers oder eines anderen, ähnlich ausgestalteten Werkzeuges an der Schräge 5 angesetzt und die Kopfplatte 12 des Betätigungsteiles 11 aus der Einfügeausnehmung 3 heraus abgehoben sowie anschließend beispielsweise zwischen zwei Fingern gegriffen und mit einer entgegen der Einführrichtung wirkenden Zugkraft beaufschlagt wird, bis die Fixiervorsprünge 21 durch die Durchführausnehmung 23 hindurchgetreten sind und die Hinterrastflächen 19 der Rastnasen 17 an der Auflageseite 6 der Auflageplatte 2 anschlagen, wobei die Schenkel 7 auf Grund ihrer Eigenelastizität selbsttätig wieder in eine im wesentlichen parallel zueinander ausgerichtete Stellung gelangen. In der nunmehr wieder eingenommenen Montagestellung gemäß Fig. 3 ist der Spreizniet aus der Setzausnehmung 26 herausziehbar und wiederverwendbar.

## Patentansprüche

1. Spreizniet mit einem Halteteil (1), das wenigstens zwei radial nach außen abspreizbare Schenkel (7) und eine Auflageplatte (2) aufweist, an die die Schenkel (7) angesetzt sind, und mit einem durch eine Durchführausnehmung (23) der Auflageplatte (2) in das Halteteil (1) einführbaren Betätigungsteil (11), das einen Schaft (13) aufweist, wobei in einer Fixierstellung des Betätigungsteiles (11) durch Eingriff von in einem Wirkbereich der Schenkel (7) angeordneten Aufweitvorsprüngen (28) die Schenkel (7) radial nach außen ausgestellt werden, wobei das Betätigungsteil (11) eine Kopfplatte (12) aufweist, die in der Fixierstellung an der Auflageplatte (2) anliegt und wobei wenigstens eine an dem Schaft (13) angesetzte Rastnase (17) vorhanden ist, die über eine bündig mit der Durchführausnehmung (23) ausgebildete Seitenfläche (15) des Schaftes (13) vorsteht und mit einer Aufgleitfläche (18) von der Kopfplatte (12) wegweisend flach angeschrägt sowie mit einer Hinterrastfläche (19) der Kopfplatte (12) zugewandt steil angestellt ist, wobei die oder jede Rastnase (17) in einem Abstand von der Kopfplatte (12) angeordnet ist, der so eingerichtet ist, dass bei Anliegen der Hinterrastfläche (19) an der Auflageplatte (2) der Schaft (13) mit den Aufweitvorsprüngen (28) eingriffsfrei ist, **dadurch gekennzeichnet, dass** der Schaft (13) einen eckigen Querschnitt mit jeweils zwei jeweils paarweise einander gegenüberliegenden breiten Seitenflächen (14) und schmalen Seitenflächen (15) aufweist, dass an den breiten Seitenflächen (14) vorstehende, in einem Abstand von der Kopfplatte (12) angeordnete Sockelstück (16) ausgebildet sind, an denen in Richtung der Kopfplatte (12) weisende und über die schmalen Seitenflächen (15) überstehende Rastnasen (17) angesetzt sind, dass in Verlängerung der Sockelstücke(16) in Richtung der Kopfplatte (12) an den breiten Seitenflächen (14) entsprechend den Sockelstücken (16) dimensionierte Füllstücke (20) angesetzt sind, die an die an die Kopfplatte (12) angrenzen, und dass die Durchführausnehmung (23) an die Dimensionen des Schaftes (13) im Bereich sowohl der Sockelstücke (16) als auch der Füllstücke (20) angepasst ist.

2. Spreizniet nach Anspruch 1, **dadurch gekennzeichnet, dass** die oder jede Hinterrastfläche (19) rechtwinklig zu dem Schaft (13) ausgerichtet ist.

3. Spreizniet nach Anspruch 1 oder Anspruch 2, **dadurch gekennzeichnet, dass** an dem Schaft (13) zwischen der Kopfplatte (12) und der oder jeder Rastnase (17) wenigstens ein nach außen vorstehender Fixiervorsprung (21) ausgebildet ist.

4. Spreizniet nach Anspruch 3, **dadurch gekennzeichnet, dass** der Abstand zwischen der oder jeder Rastnase (17) und dem oder jedem Fixiervorsprung (21) der Dicke der Auflageplatte (2) im Bereich der Durchführausnehmung (23) entspricht.

5. Spreizniet nach einem der Ansprüche 1 bis 4, **dadurch gekennzeichnet, dass** die Auflageplatte (2) eine Einfügeausnehmung (3) aufweist, in die die Kopfplatte (12) in der Fixierstellung einfügbar ist.

6. Spreizniet nach einem der Ansprüche 1 bis 5 **dadurch gekennzeichnet**, das die Kopfplatte (12) und/oder die Auflageplatte (2) eine Werkzeugansatzstruktur (5) zum Ansetzen eines Werkzeuges für das Abheben der Kopfplatte (12) von der Auflageplatte (2) aufweist.

## Claims

1. Expansible rivet having a fastening portion (1) which has at least two legs (7) which can be splayed apart in the radially outward direction and a supporting flange (2) to which the legs (7) are joined, and having an actuating portion (11) which can be inserted in the fastening portion (1) through a feed-through opening (23) in the supporting flange (2) and which has a shank (13), the legs (7) being opened out radially, when the actuating portion (11) is in a fixing position, as a result of the engagement of spreader projections (28) arranged in a functional region of the legs (7), the actuating portion (11) having a top plate (12) which rests against the supporting flange (2) in the fixing position and there being at least one latching nose (17) which is joined to the shank (13), which at least one latching nose (17) projects beyond a side-face (15) of the shank (13), which side-face (15) is formed to line up with the feed-through opening (23), and which at least one latching nose (17) is inclined at a shallow angle and faces away from the top plate (12) at a face (18) for sliding contact, and is set at a steep angle and faces towards the top plate (12) at a face for latched engagement (19), the or each latching nose (17) being arranged at a distance from the top plate (12) which is set in such a way that, when the face (19) for latched engagement is resting against the supporting flange (2), the shank (13) having the spreader projections (28) is out of engagement, **characterised in that** the shank (13) is of angular cross-section and has pairs of, respectively, wide side-faces (14) and narrow side-faces (15) which, in each pair, are oppositely situated from one another, **in that** there are formed on the wide side-faces (14) projecting pedestal blocks (16) which are arranged at a distance from the top plate (12) and to which are joined latching noses (17) which point towards the top plate (12) and which project beyond the narrow side-faces (15), **in that** there are joined to the wide side-faces (14), as continuations of the pedestal blocks (16) in the direction of the top plate (12), filler blocks (20) which are sized to correspond to the pedestal blocks (16) and which adjoin the top plate (12), and **in that** the feed-through opening (23) is matched to the dimensions of the shank (13) in the region of both the pedestal blocks (16) and the filler blocks (20).

2. Expansible rivet according to claim 1, **characterised in that** the or each face (19) for latched engagement is aligned at right angles to the shank (13).

3. Expansible rivet according to claim 1 or claim 2, **characterised in that** at least one outwardly projecting restraining projection (21) is formed on the shank (13) between the top plate (12) and the or each latching nose (17).

4. Expansible rivet according to claim 3, **characterised in that** the distance between the or each latching nose (17) and the or each restraining projection (21) corresponds to the thickness of the supporting flange (2) in the region of the feed-through opening (23).

5. Expansible rivet according to one of claims 1 to 4, **characterised in that** the supporting flange (2) has a recess (3) for insertion in which the top plate (12) can be inserted in the fixing position.

6. Expansible rivet according to one of claims 1 to 5, **characterised in that** the top plate (12) and/or the supporting flange (2) has a tool supporting structure (5) for a tool to be placed against to raise the top plate (12) from the supporting flange (2).

## Revendications

1. Rivet à segments expansibles comprenant un élément de retenue (1), qui est constitué par au moins deux segments (7) capables de s'écarter vers l'extérieur dans le plan radial et par une plaquette d'appui (2) à laquelle les segments (7) son attenants et comprenant un élément de manoeuvre (11) destiné à être inséré dans l'élément de retenue (1) au travers d'une ouverture de passage (23) ménagée dans la plaquette d'appui (2), qui comporte une tige (13), dans lequel, dans une position de verrouillage en place de l'élément de manoeuvre (11), les segments (7) sont orientés vers l'extérieur dans le plan radial par suite de la venue en prise d'encastrement de saillies d'écartement (28) disposées dans une portion d'actionnement des segments (7), dans lequel l'élément de manoeuvre (11) comporte une plaquette formant tête (12) qui, dans la position de verrouillage en place, est en contact d'application sur la plaquette d'appui (2) et dans lequel il est prévu au moins un ergot d'accrochage (17) attenant à la tige (13), qui fait saillie au-dessus d'une face latérale (15) venant en affleurement de l'évidement de passage (23) et qui comporte une face de glissement (18) présentant une conicité de tracé plat orientée vers l'extérieur par rapport à la plaquette formant tête (12) ainsi qu'également une face de cramponnement par derrière (19) à front raide orientée en direction de la plaquette formant tête (12), l'ergot ou chaque ergot d'accrochage (17) étant en l'occurrence disposé à une distance de la plaquette formant tête (12) telle que, lorsque la face de cramponnement par derrière (19) est en contact d'application sur la plaquette d'appui (2), la tige (13) n'est pas en prise d'accrochage avec les saillies d'écartement (28), **caractérisé en ce que** la tige (13) a une section transversale de forme rectangulaire comprenant respectivement une paire de faces latérales de grande largeur (14) et une paire de faces latérales étroites (15) respectivement diamétralement opposées, **en ce qu'**il est prévu sur les faces latérales de grande largeur (14) des socles (16) disposés à une certaine distance de la plaquette formant tête (12), qui sont munis d'ergots d'accrochage (17) qui sont orientés en direction e la plaquette formant tête (12) et qui font saillie au-dessus des faces latérales étroites (15), **en ce qu'**il est prévu selon une disposition attenante dans le prolongement des socles (16), dans la direction de la plaquette formant tête (12), sur les faces latérales de grande largeur (14), des éléments de remplissage (20) dimensionnés en fonction de la géométrie des socles (16), qui se terminent au niveau de la plaquette formant tête (12) et **en ce que** l'ouverture de passage (23) est adaptée aux dimensions de la tige (13) dans la zone aussi bien des socles (16) que des éléments de remplissage (20).

2. Rivet à segments expansibles selon la revendication 1, **caractérisé en ce que** la ou chaque face de cramponnement par derrière (19) est orientée perpendiculairement à la tige (13).

3. Rivet à segments expansibles selon la revendication 1 ou la revendication 2, **caractérisé en ce qu'**il est prévu, entre la plaquette formant tête (12) et l'ergot ou chaque ergot d'accrochage (17) au moins une protubérance d'immobilisation en position (21) qui fait saillie vers l'extérieur.

4. Rivet à segments expansibles selon la revendication 3, **caractérisé en ce que** l'intervalle d'écartement entre l'ergot ou chaque ergot d'accrochage (17) et la ou chaque protubérance d'immobilisation en position correspond, dans la zone de l'ouverture de passage (23), à l'épaisseur de la plaquette d'appui (2).

5. Rivet à segments expansibles selon l'une des revendications 1 à 4, **caractérisé en ce que** la plaquette d'appui (2) comporte un évidement d'insertion (3), dans lequel la plaquette formant tête (12) vient se placer dans la position d'immobilisation en position.

6. Rivet à segments expansibles selon l'une des revendications 1 à 5, **caractérisé en ce que** la plaquette formant tête (12) et, ou encore, la plaquette d'appui (2) comporte(nt) un agencement d'insertion d'outil dans lequel un outil peut être introduit pour désolidariser par un mouvement de soulèvement la plaquette formant tête (12) de la plaquette d'appui (2).
